# EUROPÄISCHE PATENTSCHRIFT

(11) **EP 3 423 911 B1**
(45) Veröffentlichungstag und Bekanntmachung des Hinweises auf die Patenterteilung: **20.01.2021**
(21) Anmeldenummer: 17706721.2
(22) Anmeldetag: 21.02.2017
(51) Int. Cl.: G05D 1/02

(54) **VERFAHREN ZUM AKTUALISIEREN EINER BELEGUNGSKARTE UND AUTONOMES FAHRZEUG**
METHOD FOR UPDATING AN OCCUPANCY MAP AND AUTONOMOUS VEHICLE
PROCÉDÉ DE MISE À JOUR D'UNE CARTE D'OCCUPATION ET VÉHICULE AUTONOME

(30) Priorität: 03.03.2016 DE 102016203547
(43) Veröffentlichungstag der Anmeldung: 09.01.2019
(73) Patentinhaber: KUKA Deutschland GmbH, 86165 Augsburg (DE)
(72) Erfinder: MEYER-DELIUS, Daniel, 81541 München (DE); BALDINI, Marco, 86161 Augsburg (DE); KÜMMERLE, Rainer, 81539 München (DE)
(74) Vertreter: Tillmann, Axel
(86) Internationale Anmeldenummer: PCT/EP2017/053843
(87) Internationale Veröffentlichungsnummer: WO 2017/148730

(56) Entgegenhaltungen:
- EP-A2- 2 473 890
- EP-A2- 2 473 890
- DE-A1-102014 200 279
- DE-A1-102014 200 279
- JP-A- 2009 169 845
- JP-A- 2009 169 845
- US-A1- 2008 009 966
- US-A1- 2008 009 966

## Beschreibung

Die Erfindung betrifft ein Verfahren zum Aktualisieren einer Belegungskarte und ein autonomes Fahrzeug.

Die JP 2009 169845 A zeigt ein Verfahren zur Aktualisierung einer Umgebungskarte, wobei eine zuvor erhaltene oder selbst ermittelte Umgebungskarte durch eine neue Umgebungskarte ersetzt wird, um Änderungen in der Umgebung zu reagieren.

Die US 2008/0009966 A1 zeigt ebenfalls ein Verfahren zur Aktualisierung einer Umgebungskarte bestehend aus Zellen, wobei eine Hinderniskarte relativ zu der Position eines Roboters erzeugt wird und die die Hinderniskarte als neue Umgebungskarte verwendet wird. Die neue Umgebungskarte wird dabei mit der alten Umgebungskarte verglichen und es wird ein Änderungsvektor für jede sich ändernde Zelle definiert, wobei der Änderungsvektor eine Richtung und eine Entfernung des Roboters zu der Zelle aufweist.

Die EP2 473 890 B2 zeigt ein System zur gleichzeitigen Ortung und Kartierung der Umgebung eines mobilen Roboters. ein Datenerfassungssystem generiert Daten in Form von Zellen, welche die physikalische Umgebung eines mobilen Geräts erfassen. Jeder der Zellen wird eine Wahrscheinlichkeit zugeordnet, ob die Zelle besetzt ist oder leeren Raum beinhaltet. Eine Verarbeitungseinrichtung ermittelt, ob Änderungen in der Besetzungswahrscheinlichkeit einer Zelle anzeigen, dass eine Zelle, die gegenwärtig als leer identifiziert wurde, besetzt worden ist oder eine Zelle, die gegenwärtig als besetzt identifiziert wurde, leer geworden ist und solche Zelle entsprechend markiert, damit diese Zelle im Hinblick auf deren Wahrscheinlichkeit ein Hindernis zu erhalten oder nicht, aktualisiert werden, während sich die besagte Wahrscheinlichkeit ändert.

Die DE 10 2014 200279 A1 zeigt ein Verfahren zum Detektieren von Objekten in einem Umfeld eines Fahrzeugs, wobei das Umfeld in ein Zellen enthaltendes Belegungsgitter unterteilt ist und den Zellen ein Belegungswert in Abhängigkeit von Kartendaten einer digitalen Karte zugeordnet sind. Stationäre Elemente entsprechen dabei belegten Zellen. Dabei werden die Zellen des Belegungsgitters mit Zellen eines Sensor-Belegungsgitters fusioniert.

Um die Umgebung bzw. das Umfeld zu modellieren, können Belegungskarten (Englisch: occupancy grid maps) verwendet werden. Belegungskarten beschreiben bzw. modellieren das Umfeld in diskreten Zellen, die vorzugsweise quadratisch und insbesondere gitterförmig angeordnet sind. Je nachdem ob der den einzelnen Zellen zugeordnete Bereich des Umfelds durch Objekte belegt oder frei ist, können die entsprechenden Zellen der Belegungskarte als belegt oder frei charakterisiert sein.

Belegungskarten werden z.B. von autonomen Fahrzeugen verwendet, um automatisch innerhalb des Umfelds zu fahren. Ein autonomes Fahrzeug umfasst einen eigenen Antrieb, um automatisch gesteuert und berührungslos geführt zu werden. Autonome Fahrzeuge sind z.B. fahrerlose Transportfahrzeuge (Englisch: Automated Guided Vehicle (AGV)) oder mobile Roboter.

Belegungskarten können z.B. durch Umfeldsensorik erstellt werden. Ein gängiges Verfahren ist z.B. das SLAM (Simultanous Localisation And Mapping), das beispielsweise aus der US 2011/0082585 A1 oder der US 8,798,840 B2 bekannt ist.

Belegungskarten stellen lediglich eine Momentaufnahme des Umfelds dar. Ändert sich das Umfeld, indem sich die Belegung bestimmter Bereiche ändert, dann beschreiben die einzelnen Zellen der Belegungskarte das aktuelle Umfeld nicht mehr ausreichend.

Die Aufgabe der Erfindung ist es, eine verbesserte Möglichkeit anzugeben, eine Belegungskarte zu aktualisieren.

Die Aufgabe der Erfindung wird gelöst durch ein Verfahren zum Aktualisieren einer einem Umfeld zugeordneten Belegungskarte, nach Anspruch 1.

Ein weiterer Aspekt der Erfindung betrifft ein autonomes Fahrzeug, aufweisend einen Fahrzeuggrundkörper, am Fahrzeuggrundkörper angeordnete Räder, wobei wenigstens einem der Räder ein Antrieb zugeordnet ist, wenigstens einen Sensor, der zum Abtasten des Umfelds, innerhalb dem sich das fahrerlose Transportfahrzeug automatisch bewegen soll, eingerichtet ist, und eine mit dem Sensor und dem Antrieb gekoppelte elektronische Steuervorrichtung, die eingerichtet ist, den Antrieb für ein automatisches Fahren des autonomen Fahrzeugs basierend auf einer Belegungskarte des Umfelds anzusteuern und die eingerichtet ist, das erfindungsgemäße Verfahren durchzuführen. Der Sensor ist vorzugsweise ein Laserscanner, insbesondere ein zweidimensionaler Laserscanner. Der Sensor kann auch eine Kamera oder ein Ultraschallsensor sein.

Das autonome Fahrzeug ist z.B. ein fahrerloses Transportfahrzeug oder ein mobiler Roboter. Die Belegungskarte ist vorzugsweise im autonomen Fahrzeug, z.B. in dessen elektronischer Steuerungsvorrichtung, gespeichert. Das autonome Fahrzeug ist insbesondere eingerichtet, sich automatisch aufgrund der Belegungskarte innerhalb des Umfelds zu bewegen.

Erfindungsgemäß wird somit eine Belegungskarte des Umfelds, innerhalb dem sich das Fahrzeug, insbesondere das autonome Fahrzeug bewegen soll, bereitgestellt. Die Belegungskarte umfasst die mehreren diskreten Zellen, welche jeweils eine ursprüngliche Belegungsinformation über die ursprüngliche Belegung entsprechender Bereiche des Umfelds umfassen. Die Belegungskarte mit ihrer ursprünglichen Belegung kann z.B. mittels eines SLAM-Verfahrens erstellt werden.

Erfindungsgemäß tastet das Fahrzeug, insbesondere das autonome Fahrzeug einen Teilbereich des Umfelds mit seinem Sensor ab. Es können auch mehrere Sensoren vorhanden sein.

Vorzugsweise erfolgt das diskrete Abtasten des Teilbereichs des Umfelds mit dem Sensor des Fahrzeugs während sich dieses innerhalb des Umfelds bewegt. Das Abtasten des Teilbereichs des Umfelds kann aber alternativ oder zusätzlich auch erfolgend während das Fahrzeug still steht. Das Zusammenfassen von Unstimmigkeiten findet vorzugsweise während der Fahrt statt, um die volle räumliche Ausdehnung der Unstimmigkeit zu erfassen.

Die vom Sensor erzeugten Signale können z.B. von einer elektronischen Steuervorrichtung des Fahrzeugs bzw. der Steuervorrichtung des autonomen Fahrzeugs ausgewertet werden. Aufgrund der Signale des Sensors bzw. aufgrund des abgetasteten Teilbereichs des Umfelds ist es dem Fahrzeug bzw. dem autonomen Fahrzeug ermöglicht, Unstimmigkeiten zwischen der aktuellen Belegung des Umfelds bzw. dessen Teilbereichs und den ursprünglichen Belegungsinformationen der entsprechenden Zellen der Belegungskarte zu erkennen.

Eine Unstimmigkeit liegt z.B. vor, wenn diskrete abgetastete Punkte des abgetasteten Teilbereichs des Umfelds frei sind, jedoch aufgrund der Belegungsinformationen der entsprechenden Zellen der Belegungskarte belegt sein sollten. Ein weiteres Beispiel einer Unstimmigkeit ist, wenn diskrete abgetastete Punkte des abgetasteten Teilbereichs des Umfelds belegt sind, jedoch aufgrund der Belegungsinformationen der entsprechenden Zellen der Belegungskarte frei sein sollten.

Erfindungsgemäß werden anschließend die erkannten Unstimmigkeiten zur Korrekturbelegungskarte gebündelt. Die Korrekturbelegungskarte ist dem abgetasteten Teilbereich zugeordnet und deren Zellen umfassen jeweils eine Belegungsinformation über die aktuelle Belegung des entsprechenden Teilbereichs.

Anschließend wird die Belegungskarte durch Aktualisieren der Belegungsinformationen der dem Teilbereich zugeordneten Zellen durch die entsprechenden Belegungsinformationen der Zellen der Korrekturbelegungskarte aktualisiert.

Anschließend wird vorzugsweise die aktualisierte Belegungskarte, d.h. die Belegungskarte mit den aktualisierten Belegungsinformationen zum Bewegen des Fahrzeugs bzw. des autonomen Fahrzeugs verwendet.

Vorzugsweise wird die Belegungskarte bzw. deren Belegungsinformationen ständig aktualisiert. Dies erfolgt vorzugsweise während sich das Fahrzeug innerhalb des Umfelds bewegt. Das Aktualisieren kann auch erfolgen, wenn das Fahrzeug still steht.

Ändert sich nach dem Aktualisieren der Belegungskarte diese derart wieder, sodass die Belegungsinformationen der Korrekturbelegungskarte nicht mehr aktuell sind, dann können gemäß einer Ausführungsform des erfindungsgemäßen Verfahrens folgende Verfahrensschritte durchgeführt werden:
- diskretes Abtasten des Teilbereichs des Umfelds mit dem Sensor während sich das Fahrzeug innerhalb des Umfelds bewegt,
- aufgrund des abgetasteten Teilbereichs des Umfelds, Erkennen von Unstimmigkeiten zwischen der aktuellen Belegung des Umfelds und der Belegungsinformationen der entsprechenden Zellen der Korrekturbelegungskarte, und
- Deaktivieren der Korrekturbelegungskarte, sodass die entsprechenden Zellen die ursprünglichen Belegungsinformationen aufweisen.

Es ist aber auch möglich, dass das erfindungsgemäße Verfahren folgende Verfahrensschritte aufweist:
- diskretes Abtasten des Teilbereichs des Umfelds mit dem Sensor während sich das Fahrzeug innerhalb des Umfelds bewegt,
- aufgrund des abgetasteten Teilbereichs des Umfelds, Erkennen von Unstimmigkeiten zwischen der aktuellen Belegung des Umfelds und der Belegungsinformationen der entsprechenden Zellen der Korrekturbelegungskarte,
- Deaktivieren der Korrekturbelegungskarte,
- Bündeln der erkannten Unstimmigkeiten zu einer weiteren Korrekturbelegungskarte, deren Zellen jeweils eine Belegungsinformation über die aktuelle Belegung des Teilbereiche des Umfelds umfasst, und
- Aktualisieren der Belegungskarte durch Aktualisieren der Belegungsinformationen der Zellen des Teilbereichs durch die entsprechenden Belegungsinformationen der Zellen der weiteren Korrekturbelegungskarte.

Nach einer bevorzugten Ausführungsform des erfindungsgemäßen Verfahrens kann dieses ein Aktualisieren der Belegungskarte durch Aktualisieren der Belegungsinformationen der dem Teilbereich zugeordneten Zellen durch die entsprechenden Belegungsinformationen der Zellen der Korrekturbelegungskarte aufweisen, sobald ein Abtasten des Umfelds mit dem Sensor ergibt, dass die Korrekturbelegungskarte mit der aktuellen Belegung des Umfelds wieder übereinstimmt.

Nach einer weiteren Variante des erfindungsgemäßen Verfahren kann dieses auch ein Aktualisieren der Belegungskarte durch Aktualisieren der Belegungsinformationen der dem Teilbereich zugeordneten Zellen durch die entsprechenden Belegungsinformationen der Zellen der Korrekturbelegungskarte aufweisen, sobald ein Abtasten des Umfelds mit dem Sensor ergibt, dass ein Teil der Korrekturbelegungskarte mit der aktuellen Belegung des Umfelds wieder übereinstimmt.

Ein Ausführungsbeispiel der Erfindung ist exemplarisch in den beigefügten schematischen Figuren dargestellt. Es zeigen:
- Fig. 1: ein autonomes Fahrzeug,
- Fig. 2: eine Draufsicht eines Umfelds mit einer ursprünglichen Belegung,
- Fig. 3: eine mehrere diskrete Zellen aufweisende Belegungskarte für das Umfeld,
- Fig. 4: die Belegungskarte, die die Belegung des Umfelds der Fig. 2 darstellt,
- Fig. 5: eine Draufsicht des Umfelds, in dem sich das autonome Fahrzeug bewegt und das eine von der Belegung der Fig. 2 unterschiedliche Belegung aufweist,
- Fig. 6: eine erste Korrekturbelegungskarte,
- Fig. 7: eine weitere Draufsicht des Umfelds, in dem sich das autonome Fahrzeug bewegt und das eine von der Belegung der Fig. 2 unterschiedliche Belegung aufweist,
- Fig. 8: eine zweite Korrekturbelegungskarte, und
- Fig. 9: die Belegungskarte, die die Belegung des Umfelds der Figuren 5 und 7 darstellt.

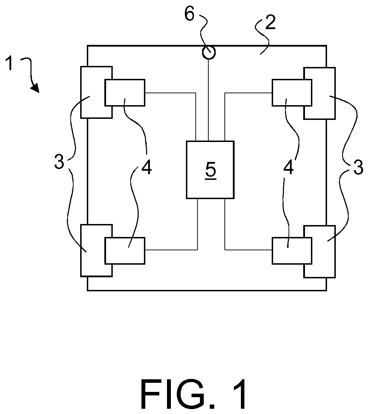

Die Fig. 1 zeigt eine Draufsicht eines autonomen Fahrzeugs 1 in einer schematischen Darstellung. Das autonome Fahrzeug 1 ist z.B. ein fahrerloses Transportfahrzeug oder ein mobiler Roboter.

Im Falle des vorliegenden Ausführungsbeispiels umfasst das autonome Fahrzeug 1 einen Fahrzeuggrundkörper 2 und mehrere Räder 3, welche am Fahrzeuggrundkörper 2 mittels nicht näher dargestellten Aufhängungen befestigt sind.

Des Weiteren umfasst im Falle des vorliegenden Ausführungsbeispiels das autonome Fahrzeug 1 Antriebe 4. Jedem der Räder 3 ist einer der Antriebe 4 zugeordnet. Die Antriebe 4 sind insbesondere elektrische Antriebe, vorzugsweise geregelte elektrische Antriebe.

Das autonome Fahrzeug 1 weist eine z.B. am Fahrzeuggrundkörper 2 angeordnete elektronische Steuervorrichtung 5 auf, die mit den Antrieben 4 verbunden ist, um diese für eine automatische Bewegung des autonomen Fahrzeugs 1 anzusteuern. Dazu läuft z.B. auf der elektronischen Steuervorrichtung 5 ein geeignetes Rechnerprogramm.

Das autonome Fahrzeug 1 umfasst wenigstens einen mit der elektronischen Steuervorrichtung 5 verbundenen Sensor 6, der zum Abtasten der Umgebung bzw. des Umfelds des autonomen Fahrzeugs 1 eingerichtet ist. Der Sensor 6 ist vorzugsweise ein Laserscanner, insbesondere ein zweidimensionaler Laserscanner. Der Sensor kann auch eine Kamera oder ein Ultraschallsensor sein.

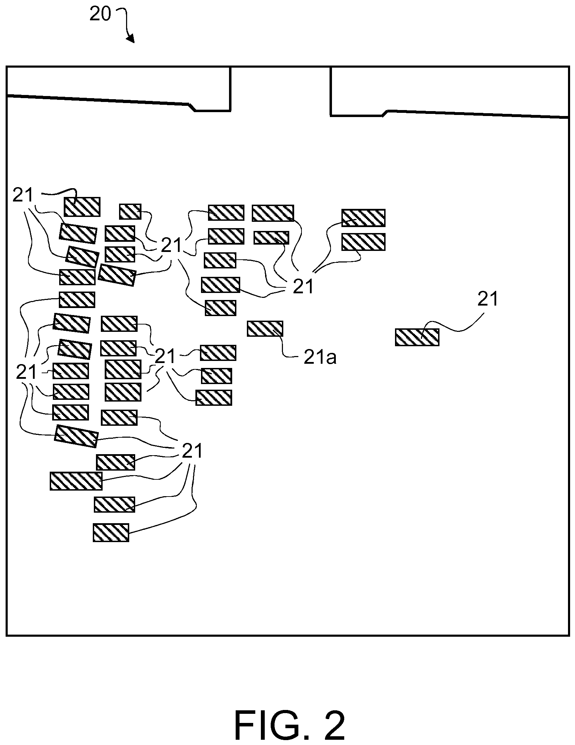

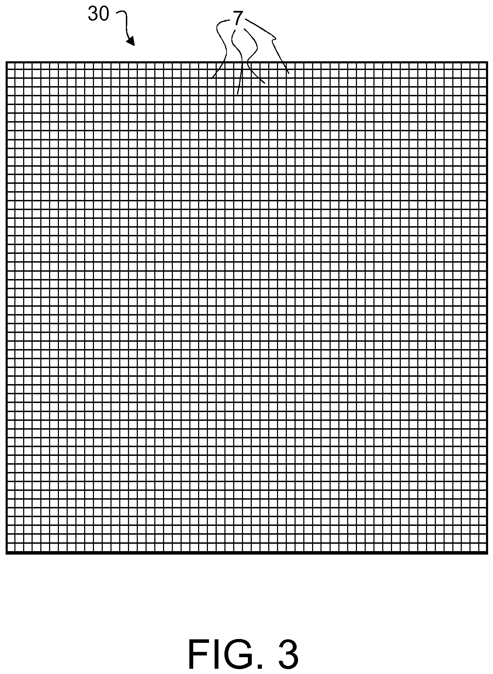

Das autonome Fahrzeug 1 ist insbesondere vorgesehen, sich automatisch innerhalb eines in der Fig. 2 gezeigten Umfelds 20 zu bewegen. Dazu ist im Falle des vorliegenden Ausführungsbeispiels eine in der Figur 3 gezeigte Belegungskarte 30 vorgesehen, welche dem Umfeld 20 zugeordnet und mehrere diskrete Zellen 7 aufweist, welche jeweils eine Belegungsinformation über die Belegung entsprechender Bereiche des Umfelds 20 umfassen. Die Belegungskarte 30 ist z.B. in einem Speicher der elektronischen Steuervorrichtung 5 gespeichert.

Im Falle des vorliegenden Ausführungsbeispiels handelt es sich bei dem Umfeld 20 um einen Parkplatz, sodass Bereiche des Umfelds 20 bzw. des Parkplatzes mit Kraftfahrzeugen 21 belegt oder frei sein können.

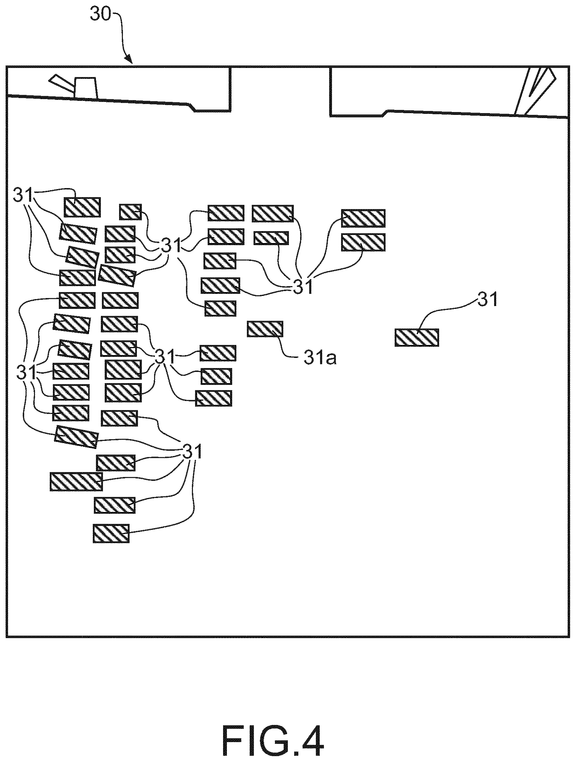

In der Fig. 2 ist das Umfeld 20 mit seiner ursprünglichen Belegung gezeigt. Die Fig. 4 zeigt die Belegung der Belegungskarte 30 mit einer ursprünglichen Belegung der Zellen 7 entsprechend der Belegung des Umfelds 20 wie in der Fig. 2 dargestellt. Sind Zellen 7 der Belegungskarte 30 belegt (belegte Zellen 31), so sind diese schwarz dargestellt, freie Zellen dagegen weiß. Die belegten Zellen 31 sind im Falle des vorliegenden Ausführungsbeispiels den Umrissen der Kraftfahrzeuge 21 zugeordnet. Die Belegungskarte 30 mit ihrer ursprünglichen Belegung wurde z.B. mit einem SLAM-Verfahren hergestellt. Es ist auch möglich, dass Teile des Umfelds 20 noch nicht abgetastet wurden, sodass die entsprechenden Zellen 7 weder als belegt noch als frei eingeteilt sind.

Die Belegung des Umfelds 20 ist in der Regel nicht zeitlich konstant, da z.B. Kraftfahrzeuge 21 den Parkplatz verlassen oder zusätzlich Kraftfahrzeuge 21b auf dem Parkplatz parken.

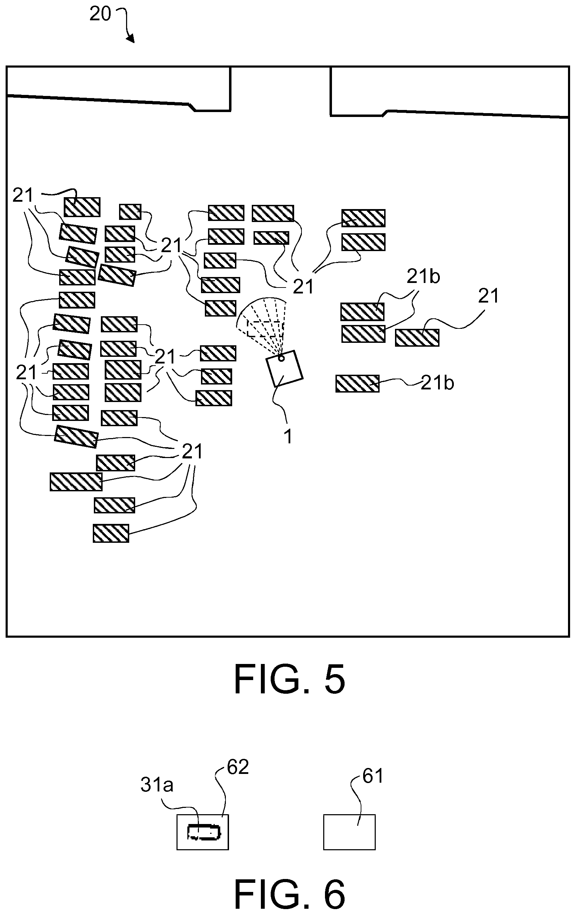

Die Fig. 5 zeigt das Umfeld 20 mit einer von der in der Fig. 2 gezeigten ursprünglichen Belegung unterschiedlichen späteren Belegung.

Im Falle des vorliegenden Ausführungsbeispiels parkt eines der Kraftfahrzeuge nicht mehr auf dem Parkplatz, sodass der entsprechende Bereich des Umfelds 20 nun frei ist. Dieses Kraftfahrzeug ist in der Fig. 2 mit dem Bezugszeichen 21a versehen und die entsprechenden Zellen 7 der Belegungskarte 30 mit dem Bezugszeichen 31a, siehe Fig. 4. Außerdem parken nun weitere Kraftfahrzeuge 21b auf dem Parkplatz, sodass nun im Vergleich zur ursprünglichen, in der Fig. 2 gezeigten Belegung des Umfelds 20 weitere Bereiche belegt sind.

In der Fig. 5 ist zusätzlich zu den Kraftfahrzeugen 21, 21b das autonome Fahrzeug 1 gezeigt.

Im Falle des vorliegenden Ausführungsbeispiels ist das autonome Fahrzeug eingerichtet, einen Teilbereich des Umfelds 20 mit seinem Sensor 6 abzutasten, insbesondere während sich das autonome Fahrzeugs 1 automatisch innerhalb des Umfelds 20 bewegt.

Das autonome Fahrzeug 1 ist im Falle des vorliegenden Ausführungsbeispiels ferner eingerichtet, das Ergebnis des Abtastens mit der Belegungskarte 30 in ihrer ursprünglichen Belegung zu vergleichen und Unstimmigkeiten zwischen der aktuellen Belegung des Umfelds 20 und der ursprünglichen Belegungsinformation der entsprechenden Zellen 7 der Belegungskarte 30 zu erkennen.

In dem in de Fig. 5 gezeigten Beispiels erkennt das autonome Fahrzeug 20 eine Unstimmigkeit zwischen der aktuellen Belegung und der ursprünglichen Belegung, da es aufgrund der ursprünglichen Belegung des Umfelds 20 eine Belegung des abgetasteten Teilbereichs erwartet, das entsprechende Kraftfahrzeug 21 jedoch nicht mehr den Teilbereich belegt.

Das autonome Fahrzeug 1 ist im Falle des vorliegenden Ausführungsbeispiels ferner eingerichtet, die einzelnen erkannten Unstimmigkeiten zu einer in der Fig. 6 gezeigten ersten Korrekturbelegungskarte 61 zu bündeln. Die erste Korrekturbelegungskarte 61 umfasst ebenfalls mehrere diskrete Zellen und ist dem abgetasteten Teilbereich zugeordnet. Die Zellen der Korrekturbelegungskarte 61 umfassen jeweils eine Belegungsinformation über die aktuelle Belegung des entsprechenden Teilbereichs des Umfelds 20.

Da in dem in der Fig. 5 gezeigten Beispiel der abgetastete Teilbereich frei ist, sind die Zellen der ersten Korrekturbelegungskarte 61 ebenfalls frei und deshalb weiß dargestellt.

Die Fig. 5 zeigt noch den der Korrekturbelegungskarte 61 zugeordnete Teilbelegungsbereich 62 der Belegungskarte 30 in ihrer ursprünglichen Belegung.

Das autonome Fahrzeug 1 ist im Falle des vorliegenden Ausführungsbeispiels ferner eingerichtet, die Belegungskarte 30 durch Aktualisieren der Belegungsinformationen der Zellen 7 des Teilbelegungsbereichs 62 durch die entsprechenden Belegungsinformationen der Zellen 7 der Korrekturbelegungskarte 61 zu aktualisieren.

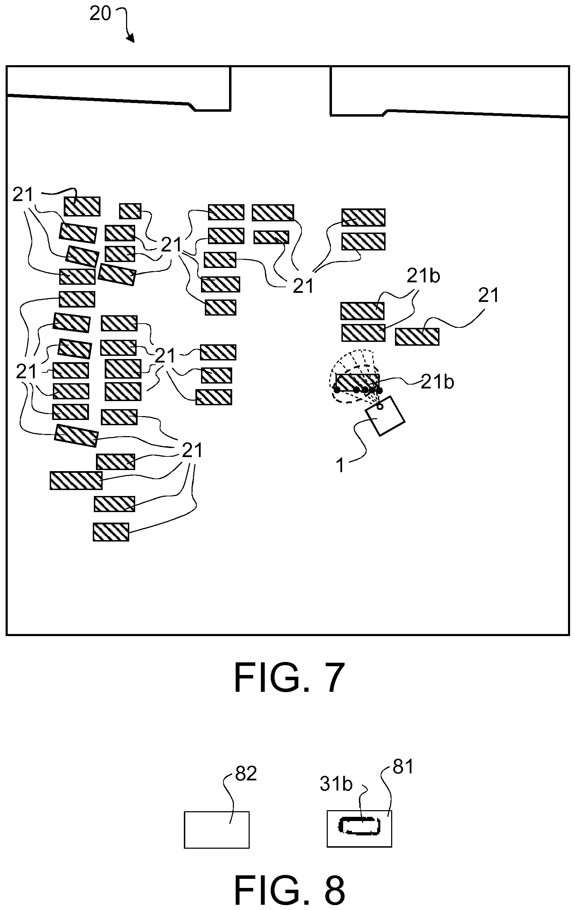

Die Fig. 7 zeigt ein Beispiel, bei dem das autonome Fahrzeug 1 beim Abtasten eines weiteren Teilbereichs des Umfelds 20 eines der neu parkenden Kraftfahrzeuge 21b erkennt, sodass das autonome Fahrzeug ebenfalls eine Unstimmigkeit zwischen der aktuellen Belegung und der ursprünglichen Belegungskarte 30 erkennt. Aufgrund der ursprünglichen Belegung des Umfelds 20 erwartet das autonome Fahrzeug 1 keine Belegung des abgetasteten weiteren Teilbereichs.

Das autonome Fahrzeug 1 ist im Falle des vorliegenden Ausführungsbeispiels ferner eingerichtet, die einzelnen erkannten Unstimmigkeiten zu einer in der Fig. 8 gezeigten zweiten Korrekturbelegungskarte 81 zu bündeln. Die Korrekturbelegungskarte 81 umfasst ebenfalls mehrere diskrete Zellen und ist dem aktuell abgetasteten Teilbereich, d.h. dem weiteren Teilbereich der kompletten Belegungskarte 30 zugeordnet. Die Zellen der zweiten Korrekturbelegungskarte 81 umfassen jeweils eine Belegungsinformation über die aktuelle Belegung des entsprechenden Teilbereichs des Umfelds 30.

Da in dem in der Fig. 7 gezeigten Beispiel der abgetastete weitere Teilbereich nun belegt ist, sind die entsprechenden Zellen (belegte Zellen 31b) der zweiten Korrekturbelegungskarte 81 belegt und deshalb schwarz dargestellt.

Die Fig. 8 zeigt noch den der Korrekturbelegungskarte 81 zugeordnete Teilbelegungsbereich 82 der Belegungskarte 30 in ihrer ursprünglichen Belegung.

Das autonome Fahrzeug 1 ist im Falle des vorliegenden Ausführungsbeispiels ferner eingerichtet, die Belegungskarte 30 durch Aktualisieren der Belegungsinformationen der Zellen 7 des Teilbelegungsbereichs 82 durch die entsprechenden Belegungsinformationen der Zellen der zweiten Korrekturbelegungskarte 81 zu aktualisieren.

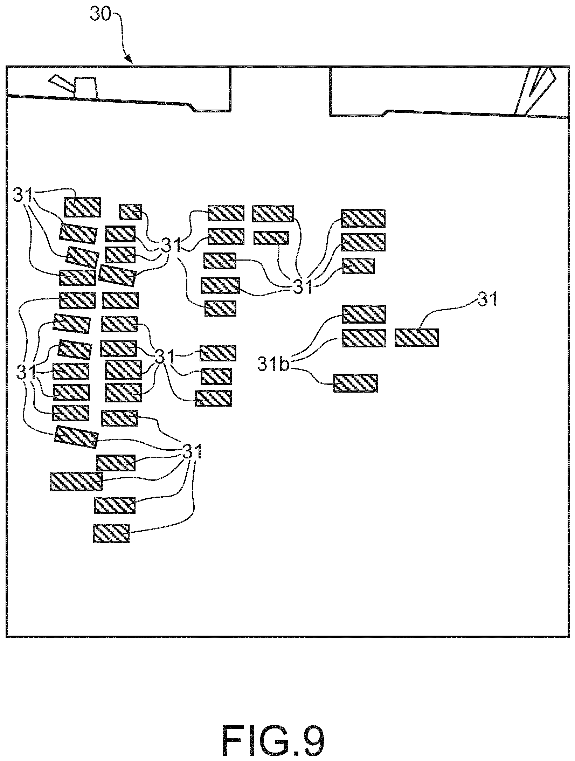

Die Fig. 9 zeigt die Belegungskarte 30 mit ihrer aktuellen Belegung.

Das autonome Fahrzeug 1 ist im Falle des vorliegenden Ausführungsbeispiels eingerichtet, die Belegungskarte 30 mit ihrer aktuellen Belegung zu verwenden.

Das autonome Fahrzeug 1 ist insbesondere eingerichtet, die Belegungskarte 30 kontinuierlich zu aktualisieren. Die Belegungskarte 30 wird vorzugsweise während des automatischen Bewegens aktualisiert. Die Belegungskarte 30 kann auch im Stillstand des autonomen Fahrzeugs 1 aktualisiert werden.

Das autonome Fahrzeug 1 ist insbesondere eingerichtet, Unstimmigkeiten zwischen der aktuellen Belegung des Umfelds 20 und der Belegungsinformation der entsprechenden Zellen der Korrekturbelegungskarte 61, 81 zu erkennen.

Wird eine solche Unstimmigkeit erkannt, dann kann die entsprechende Korrekturbelegungskarte 61, 81 deaktiviert werden, sodass die entsprechenden Zellen 7 die Belegungsinformationen der ursprünglichen Belegung aufweisen.

Es ist aber auch möglich, dass die erkannten Unstimmigkeiten zu einer weiteren Korrekturbelegungskarte gebündelt werden, deren Zellen jeweils eine Belegungsinformation über die aktuelle Belegung entsprechender Teilbereiche des Umfelds 20 umfasst. Danach kann die Belegungskarte durch Aktualisieren der Belegungsinformationen der Zellen diesen Teilbereich zugeordneten Zellen durch die entsprechenden Belegungsinformationen der Zellen der weiteren Korrekturbelegungskarte aktualisiert werden.

Das autonome Fahrzeug 1 kann auch eingerichtet sein, die Belegungskarte durch Aktualisieren der Belegungsinformationen dem Teilbereich zugeordnete Zellen durch die entsprechenden Belegungsinformationen der Zellen der Korrekturbelegungskarte zu aktualisieren, sobald ein Abtasten des Umfelds mit dem Sensor 6 ergibt, dass die Korrekturbelegungskarte mit der aktuellen Belegung des Umfelds 20 wieder übereinstimmt.

Das autonome Fahrzeug 1 kann auch eingerichtet sein, die Belegungskarte 30 durch Aktualisieren der Belegungsinformationen der dem Teilbereich zugeordneten Zellen durch die entsprechenden Belegungsinformationen der Zellen der Korrekturbelegungskarte zu aktualisieren, sobald ein Abtasten des Umfelds 20 mit dem Sensor 6 ergibt, dass ein Teil der Korrekturbelegungskarte mit der aktuellen Belegung des Umfelds 20 wieder übereinstimmt.

## Patentansprüche

1. Verfahren zum Aktualisieren einer einem Umfeld (20) zugeordneten Belegungskarte (30), aufweisend folgende Verfahrensschritte:
- Bereitstellen einer Belegungskarte (30) mit mehreren diskreten Zellen (7), welche jeweils eine ursprüngliche Belegungsinformation über die ursprüngliche Belegung entsprechender Bereiche des Umfelds (20) umfassen,
- diskretes Abtasten eines Teilbereichs des Umfelds (20) mit einem Sensor (6) eines Fahrzeugs (1),
- aufgrund des abgetasteten Teilbereichs des Umfelds (20), Erkennen von Unstimmigkeiten zwischen der aktuellen Belegung des Teilbereichs und der ursprünglichen Belegungsinformationen der entsprechenden Zellen (7) der Belegungskarte (30),
- Bündeln der erkannten Unstimmigkeiten zu einer Korrekturbelegungskarte (61, 81), die dem abgetasteten Teilbereich des Umfelds (20) zugeordnet ist und deren Zellen jeweils eine Belegungsinformation über die aktuelle Belegung des Teilbereichs umfassen, und
- Aktualisieren der Belegungskarte (30) durch Aktualisieren der Belegungsinformationen der dem Teilbereich zugeordneten Zellen (7) durch die entsprechenden Belegungsinformationen der Zellen der Korrekturbelegungskarte (61, 81),
**gekennzeichnet durch** folgende weitere Verfahrensschritte:
- diskretes Abtasten des Teilbereichs des Umfelds (20) mit dem Sensor (6) während sich das Fahrzeug (1) innerhalb des Umfelds (20) bewegt,
- aufgrund des abgetasteten Teilbereichs (61, 81) des Umfelds (20), Erkennen von Unstimmigkeiten zwischen der aktuellen Belegung des Umfelds (20) und der Belegungsinformation der entsprechenden Zellen (7) der Korrekturbelegungskarte (61, 81), und
- Deaktivieren der Korrekturbelegungskarte (61, 81),
- Bündeln der erkannten Unstimmigkeiten zu einer weiteren Korrekturbelegungskarte, deren Zellen (7) jeweils eine Belegungsinformation über die aktuelle Belegung entsprechender Bereiche des Umfelds (20) umfasst, und
- Aktualisieren der Belegungskarte (30) durch Aktualisieren der Belegungsinformationen der dem weiteren Teilbereich zugeordneten Zellen (7) durch die entsprechenden Belegungsinformationen der Zellen (7) der weiteren Korrekturbelegungskarte.

2. Verfahren nach Anspruch 1, aufweisend: Aktualisieren der Belegungskarte (30) durch Aktualisieren der Belegungsinformationen der dem Teilbereich zugeordneten Zellen (7) durch die entsprechenden Belegungsinformationen der Zellen (7) der Korrekturbelegungskarte (61, 81), sobald ein Abtasten des Umfelds (20) mit dem Sensor (6) ergibt, dass die Korrekturbelegungskarte (61, 81) mit der aktuellen Belegung des Umfelds (20) wieder übereinstimmt.

3. Verfahren nach Anspruch 1, aufweisend: Aktualisieren der Belegungskarte (30) durch Aktualisieren der Belegungsinformationen der dem Teilbereich zugeordneten Zellen (7) durch die entsprechenden Belegungsinformationen der Zellen (7) der Korrekturbelegungskarte (61, 81), sobald ein Abtasten des Umfelds (20) mit dem Sensor (6) ergibt, dass ein Teil der Korrekturbelegungskarte (30) mit der aktuellen Belegung des Umfelds (20) wieder übereinstimmt.

4. Verfahren nach einem der Ansprüche 1 bis 3, wobei der Sensor (6) ein Laserscanner, insbesondere ein zweidimensionaler Sensor ist.

5. Autonomes Fahrzeug, aufweisend einen Fahrzeuggrundkörper (2), am Fahrzeuggrundkörper (2) angeordnete Räder, von denen wenigstens einem der Räder (3) ein Antrieb (4) zugeordnet ist, wenigstens einen Sensor (6), der zum Abtasten des Umfelds (20), innerhalb sich das fahrerlose Transportfahrzeug automatisch bewegen soll, eingerichtet ist, und eine mit dem Sensor (6) und dem Antrieb (4) gekoppelte elektronische Steuervorrichtung (5), die eingerichtet ist, den Antrieb (4) für ein automatisches Bewegen des autonomen Fahrzeugs (1) basierend auf einer Belegungskarte (3) des Umfelds (20) anzusteuern und die eingerichtet ist, das Verfahren nach einem der Ansprüche 1 bis 4 durchzuführen.

## Claims

1. Method for updating an occupation map (30) associated with an environment (20), with the following steps:
- Providing an occupancy map (30) with several discrete cells (7), each containing original occupancy information about the original allocation of corresponding areas of the environment (20),
- discrete scanning of a sub-area of the environment (20) with a sensor (6) of a vehicle (1),
- due to the sampled sub-area of the field (20), detection of discrepancies between the current allocation of the sub-area and the original occupancy information of the corresponding cells (7) of the occupancy map (30),
- Bundling the detected inconsistencies to a correla-tion occupation map (61, 81), which is assigned to the sampled sub-area of the environment (20) and each of which includes an occupancy information about the current occupation of the subregion, and
- Updating the occupancy map (30) by updating the assignment information of the cells assigned to the sub-rich (7) by the corresponding occupancy information of the cells of the correction occupation map (61, 81),
- discrete scanning of the sub-area of the environment (20) with the sensor (6) while the vehicle (1) is moving within the environment (20),
- due to the scanned sub-range (61, 81) of the environment (20), identification of inconsistencies between the current occupancy of the environment (20) and the information of the corresponding cells (7) of the correction allocation map (61, 81), and
- Disabling the correction occupation map (61, 81),
- Bundling the detected inconsistencies to a further correction occupation map, with each of its cells (7) each include occupancy information on the current occupancy of corresponding areas of the environment (20), and
- Update the occupation map (30) by updating the assignment information of the cells (7) assigned to the further subrange by the corresponding assignment information of the cells (7) of the further correction occupation map.

2. Method according to claim 1, comprising: Updating the occupation map (30) by updating the identification information of the cells (7) assigned to the subrange by the corresponding assignment information of the cells (7) of the correction occupation map (61, 81) as soon as a scan of the environment (20) with the sensor (6) shows that the correction occupation map (61, 81) corresponds again with the current assignment of the environment (20) again.

3. Method according to claim 1, comprising: Updating the occupation map (30) by updating the identification information of the cells (7) assigned to the subrange by the corresponding assignment information of the cells (7) of the correction occupation map (61, 81) as soon as a sampling of the environment (20) with the sensor (6) shows that part of the correction assignment card (30) corresponds again with the current allocation of the environment (20) again.

4. The method according to any one of claims 1 to 3, wherein the sensor (6) is a laser scanner, in particular a two-dimensional sensor.

5. Autonomous vehicle, having a vehicle base body (2), wheels arranged on the base body (2), of which at least one of the wheels (3) is assigned a drive (4), at least one sensor (6) is set up to scan the environment (20), within which the driverless transport vehicle is to move automatically, and an electronic control device (5) coupled with the sensor (6) and the drive (4), which is set up to steer the drive (4) for an automatic movement of the autonomous vehicle (1) based on an occupation map (3) of the environment (20) and which is set up to perform the procedure according to any of claims 1 to 4.

## Revendications

1. Méthode de mise à jour d'une carte d'occupation (30) associat-ed avec un environnement (20), avec les étapes suivantes:
- Fournir une carte d'occupation (30) avec plusieurs cellules de dis-crète (7), chacune contenant des informations d'occupation originales sur l'allocation originale des zones de corre-sponding de l'environnement (20),
- balayage discret d'une sous-zone de l'environnement (20) avec un capteur (6) d'un véhicule (1),
- en raison de la sous-zone échantillonnée du champ (20), de la désétion des écarts entre l'alloca-tion actuelle de la sous-zone et l'occupation initiale en formation des cellules correspondantes (7) de la carte occupancy (30),
- Regrouper les incohérences détectées sur une carte d'occupation correla-tion (61, 81), qui est attribuée à la sous-zone échantillonnée de l'environnement (20) et qui comprend chacune des informations sur l'occupation de la sous-région, et
- Mise à jour de la carte d'occupation (30) en mettant à jour les informations de signalisation des cellules assignées aux sous-riches (7) par l'occupation correspondante des cellules de la carte d'occupation de correction (61, 81),
- balayage discret de la sous-zone de l'environnement (20) avec le capteur (6) pendant que le véhicule (1) se déplace dans l'environnement (20),
- en raison de la sous-plage numérisée (61, 81) de l'envi-ronment (20), de l'identification des incohérences, de l'occupation actuelle de l'environnement (20) et de l'information des cellules correspondantes (7) de la carte d'allocation de correction (61, 81), et
- Désactiver la carte d'occupation de correction (61, 81),
- Le regroupement des incohérences détectées à une autre carte d'occupation de correction, chacune de ses cellules (7) comprennent des informations sur l'occupation des zones correspondantes de l'environment (20), et
- Mettre à jour la carte d'occupation (30) en mettant à jour les informations de signalisation des cellules (7) affectées à l'autre sous-range par les informations d'affectation correspondantes des cellules (7) de la carte d'occupation correc-tion supplémentaire.

2. Méthode selon la revendication 1, comprenant : Mise à jour de la carte d'occupation (30) en mettant à jour les informations d'identifica-tion des cellules (7) assignées au sous-ensemble par les informations d'affectation correspondantes des cellules (7) de la carte d'occupation de correction (61, 81) dès qu'un balayage de l'environnement (20) avec le capteur (6) montre que la carte de correction occu-pation (61, 81) correspond à nouveau à l'affectation cur-rent de l'environnement (20) à nouveau.

3. Méthode selon la revendication 1, comprenant : Mise à jour de la carte d'occupation (30) en mettant à jour les informations d'identifica-tion des cellules (7) assignées au sous-ensemble par les informations d'affectation correspondantes des cellules (7) de la carte d'occupation de correction (61, 81) dès qu'un échantillonnage de l'environnement (20) avec le capteur (6) montre qu'une partie de la carte d'affectation de cor-rection (30) correspond à nouveau à l'allocation actuelle de l'environnement (20).

4. La méthode selon l'une des revendications 1 à 3, dans laquelle le capteur (6) est un scanner laser, en particular un capteur bidimensionnel.

5. Véhicule autonome, ayant une carrosserie de base de véhicule (2), roues disposées sur la carrosserie de base (2), dont au moins une des roues (3) est assignée un lecteur (4), au moins un capteur (6) est mis en place pour scanner l'envi-ronment (20), dans lequel le véhicule de transport sans conducteur doit se déplacer automatiquement, et un dispositif de commande électronique (5) couplé avec le capteur (6) et le lecteur (4), qui est mis en place pour diriger le lecteur (4) pour un mouvement au-tomatique de la vé-hicle autonome (1) sur la base d'une carte d'occupation (3) de l'environment (20) et qui est mis en place pour effectuer la procédure selon l'une des revendications 1 à 4.
